# EUROPEAN PATENT SPECIFICATION

(11) **EP 2 243 570 B1**
(45) Date of publication and mention of the grant of the patent: **06.06.2012**
(21) Application number: 10157495.2
(22) Date of filing: 24.03.2010
(51) Int. Cl.: B21D 53/78, B21D 26/02, B23P 15/04, B23K 20/00

(54) **A method of manufacturing a component comprising an internal structure such a component and turbomachine having such a component**
Verfahren zur Herstellung einer Komponente mit einer inneren Struktur, solche Komponente und Strömungsmaschine mit einer solchen Komponente
Procédé de fabrication d'un composant comprenant une structure interne, tel composant et turbomachine avec tel composant

(30) Priority: 24.04.2009 GB 0907004
(43) Date of publication of application: 27.10.2010
(73) Proprietor: Rolls-Royce plc, London SW1E 6AT (GB)
(72) Inventor: Strother, Oliver, Leeds, LS16 7LP (GB)
(74) Representative: Roberts, Nicholas John

(56) References cited:
- EP-A1- 1 541 953
- EP-A2- 0 130 583
- GB-A- 2 450 934
- US-A- 4 522 860
- US-A1- 2006 255 098
- US-B1- 6 419 146

## Description

This invention relates to a method of manufacturing a component comprising an internal structure, and particularly but not exclusively relates to applications of the method in hollow aerofoil components for turbomachines.

It is known to manufacture hollow metallic aerofoils for example to be used as blades in a jet engine, and in particular fan blades for a turbomachine, by superplastic forming and diffusion bonding metallic panels, the panels forming pressure and suction surfaces of the blade. Such structures are widely used in the civil aerospace industry, for example in wide-chord fan blades, and may also be used in blisks (i.e. bladed disks), particularly in military applications. The metallic panels may include elementary metal, metal alloys and metal matrix composites and at least one of the metallic panels must be capable of superplastic extension. In one known process the surfaces of the panels to be joined are cleaned, and at least one surface of one or more of the panels is coated in preselected areas with a stop-off material to prevent diffusion bonding. The panels are arranged in a stack and the edges of the panels are welded together, except where a pipe is welded to the panels, to form an assembly. The pipe enables a vacuum, or inert gas pressure, to be applied to the interior of the assembly. The assembly is placed in an autoclave and heated so as to "bake out" the binder from the material to prevent diffusion bonding. The assembly is then evacuated, using the pipe, and the pipe is sealed. The sealed assembly is placed in a pressure vessel and is heated and pressed to diffusion bond the panels together to form an integral structure. Diffusion bonding occurs when two mat surfaces are pressed together under temperature, time and pressure conditions that allow atom interchange across the interface. The first pipe is removed and a second pipe is fitted to the diffusion bonded assembly at the position where the first pipe was located. The integral structure is located between appropriately shaped dies and is placed within an autoclave. The integral structure and dies are heated and pressurised fluid is supplied through the second pipe into the interior of the integral structure to cause at least one of the panels to be superplastically formed to produce an article matching the shape of the dies.

In addition to the hollow assembly just described, it is also known to insert a membrane between the metallic panels prior to the above described process. The location of diffusion bonds between the membrane and the adjacent panels can be controlled by applying the stop-off material to preselected areas on each side of the membrane (or respective panels). When the aerofoil is subsequently expanded, the membrane adheres to the panels where the diffusion bond is allowed to form and thereby provides an internal structure. The internal structure is provided to increase the strength and stiffness of the aerofoil and also to prevent "planting" of the panels.

The assembly may be filled or part filled by a suitable material to provide damping of the structure and therefore to reduce vibration. A suitable material may be one which possesses viscoelastic properties. Viscoelasticity is a property of a solid or liquid which when deformed exhibits both viscous and elastic behaviour through the simultaneous dissipation and storage of mechanical energy. A known method is to introduce a viscoelastic material, for example a Huntsman™ syntactic damping paste or a similar product, into the cavity by injecting or otherwise introducing the material into some or all of the cavity. This technique may be applied in a hollow assembly wherein the cavity is smooth walled with no internal structure, see GB2371095 for example. In this configuration the viscoelastic material is restrained solely by the bond between the viscoelastic material and the walls of the cavity. If this bond is not sufficient to retain the viscoelastic material during working conditions, in particular due to centrifugal loading, then, since the viscoelastic material is a parasitic mass which is unable to support its own weight, the hydrostatic load of the unrestrained material will cause the blade to fail rapidly. Accordingly, the consequences of failure of this bond are severe. It is therefore desirable to provide some form of mechanical keying as an alternative or additional means of retaining and restraining the viscoelastic material. An internal structure, for example as described above, may be used to provide such a restraining or retaining effect on the injected material. However, by providing a rigid internal structure the benefits of damping the aerofoil may be reduced as the aerofoil is less flexible as a result of the internal structure. This may lead to additional problems where the aerofoil prematurely fatigues or cracks as a result of the reduced flexibility. Other configurations use internal ribs, which may be attached to alternate interior walls of the aerofoil but which are not connected to one another, see for example patent application number GB0713699.7 and US 2006/0255098 A. This configuration permits damping of the assembly whilst the re-entrant features still provide a means of retaining the injected material. Other methods use dual membranes to produce a lightweight internal structure in the aerofoil, see for example patent application number GB0808840.3.

The internal structure is such that it may advantageously bear a significant load under normal working conditions which allows the thickness of the panels to be reduced and the size of the cavity to be increased. Also the internal structure may provide additional birdstrike resistance. However, the use of an internal structure to physically restrain the viscoelastic material inevitably adds weight to the aerofoil and thus increases the stresses on the aerofoil, in particular at the root of the aerofoil. This increases the blade off energy if the blade were to fail, which must be taken into account when designing the blade retention system. In addition the provision of complex internal structures increases manufacturing costs and lead times. It is therefore desirable to provide an improved method of restraining a viscoelastic material within a cavity which addresses some or all of the above problems associated with the prior art methods.

According to a first aspect of the present invention there is provided a method of manufacturing a component comprising a first layer, a second layer and an internal structure therebetween, wherein the method comprises: providing the internal structure with a first bridging portion and a second bridging portion with a gap therebetween; bonding each bridging portion to the first layer at first and second ends of each bridging portion; providing an interlocking portion and disposing the interlocking portion such that: a central portion of the interlocking portion is in the gap between the first and second bridging portions; a first end of the interlocking portion is between the first bridging portion and the first layer; and a second end of the interlocking portion is between the second bridging portion and the first layer; bonding the central portion of the interlocking portion to the second layer; expanding the component so that the first and second layers are forced apart and the first and second ends of the interlocking portion are deformed by the first and second bridging portions respectively so as to form first and second lugs extending into a cavity defined between the first and second layers.

The method may further comprise superplastic forming and diffusion bonding any two of the first layer, second layer, first bridging portion, second bridging portion and interlocking portion.

The method may further comprise providing a damping material between the first and second layers.

The interlocking portion may not be directly bonded to the first and second bridging portions.

The method may further comprise providing a first membrane and a second membrane. The first and second membranes may be disposed between the first and second layers so as to form the internal structure with the first membrane adjacent the first layer and the second membrane adjacent the second layer. The method may further comprise: applying a stop-off material in a first predetermined pattern between the first layer and the first membrane so as to prevent a diffusion bond from forming between the first layer and the first membrane across regions defined by said first predetermined pattern; applying the stop-off material in a second predetermined pattern between the second layer and the second membrane so as to prevent a diffusion bond from forming between the second layer and the second membrane across regions defined by said second predetermined pattern; and applying the stop-off material in a third predetermined pattern between the first and second membranes so as to prevent a diffusion bond from forming between the first and second membranes across regions defined by said third predetermined pattern.

The first membrane may comprise first and second support portions and a separate first intermediate portion disposed between the first and second support portions.

The method may further comprise bonding the first and second support portions of the first membrane to the first layer.

The second membrane may comprise first and second support portions, the first and second bridging portions and a separate second intermediate portion disposed between the first and second support portions of the second membrane. The method may further comprise bonding the first and second support portions of the second membrane to the first and second support portions of the first membrane respectively; and bonding the second intermediate portion of the second membrane to the first intermediate portion of the first membrane.

The interlocking portion may comprise the first and second intermediate portions, the first and second ends of the interlocking portion may correspond to first and second ends of the first intermediate portion; and the central portion of the interlocking portion may correspond to the second intermediate portion.

The method may further comprise laser cutting the second membrane to separate the second intermediate portion from the first and second bridging portions.

The method may further comprise heating and pressing the first and second layers and the first and second membranes to diffusion bond the first and second layers and the first and second membranes together to form an integral structure.

The method may further comprise: placing the first and second layers and the first and second membranes between appropriately shaped dies; heating the first and second layers, the first and second membranes and dies; and supplying a pressurised fluid between the first layer and first membrane, first membrane and second membrane, and second membrane and second layer to cause at least one of the first and second layers and first and second membranes to be superplastically formed.

The component may be an aerofoil structure for a turbomachine. The component may be a compressor fan blade.

According to a second aspect of the present invention there is provided a turbomachine having a component manufactured, the component comprising a first layer, a second layer and an internal structure therebetween, wherein the method comprises: providing the internal structure with a first bridging portion and a second bridging portion with a gap therebetween; bonding each bridging portion to the first layer at first and second ends of each bridging portion; providing an interlocking portion and disposing the interlocking portion such that: a central portion of the interlocking portion is in the gap between the first and second bridging portions; a first end of the interlocking portion is between the first bridging portion and the first layer; and a second end of the interlocking portion is between the second bridging portion and the first layer; bonding the central portion of the interlocking portion to the second layer; expanding the component so that the first and second layers are forced apart and the first and second ends of the interlocking portion are deformed by the first and second bridging portions respectively so as to form first and second lugs extending into a cavity defined between the first and second layers.

According to a third aspect of the present invention there is provided a component comprising a first layer, a second layer and an internal structure therebetween, wherein the internal structure comprises: a first bridging portion and a second bridging portion with a gap therebetween, each bridging portion being bonded to the first layer at first and second ends of each bridging portion; an interlocking portion disposed such that: a central portion of the interlocking portion is in the gap between the first and second bridging portions; a first end of the interlocking portion is between the first bridging portion and the first layer; and a second end of the interlocking portion is between the second bridging portion and the first layer; wherein the central portion of the interlocking portion is bonded to the second layer and the first and second ends of the interlocking portion are deformed so as to form first and second lugs extending into a cavity defined between the first and second layers.

For a better understanding of the present invention, and to show more clearly how it may be carried into effect, reference will now be made, by way of example, to the accompanying drawings, in which:-
Figure 1 shows a perspective view of a component according to the present invention (the second layer has been omitted to reveal the internal structure);
Figure 2 shows a side view of a component according to the present invention; and
Figures 3(a)-(d) show a selection of the method steps involved in manufacturing a component according to an embodiment of the present invention.

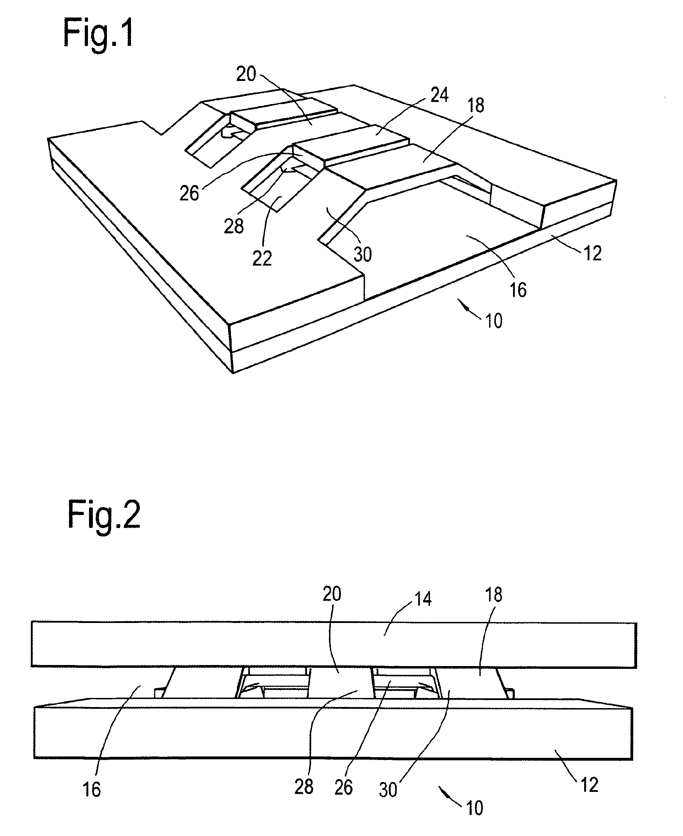

With reference to Figures 1 and 2, a component 10 according to the present invention comprises a first layer 12, a second layer 14 (not shown in Figure 1 for sake of clarity) and an internal structure 16, which is disposed between the first and second layers 12, 14. The internal structure 16 comprises a first bridging portion 18 and a second bridging portion 20 with a gap 22 therebetween. Each bridging portion 18, 20 is bonded to the first layer 12 at first and second ends of each bridging portion. In the finished component 10, the bridging portions 18, 20 are arched such that the bridging portions do not make contact with the first layer 12 other than at the first and second ends of the bridging portions and a space exists between the bridging portions 18, 20 and the first layer 12. The bridging portions 18, 20 are also disposed so that, in the finished component 10, they do not contact the second layer either.

The internal structure 16 comprises an interlocking portion 24 with a central portion 26 having a greater thickness than at first and second ends 28, 30 of the interlocking portion 24. The interlocking portion 24 is disposed such that: the central portion 26 is in the gap 22 between the first and second bridging portions 18, 20; and the first end 28 of the interlocking portion 24 is between the first bridging portion 18 and the first layer 12; and the second end 30 of the interlocking portion 24 is between the second bridging portion 20 and the first layer 12. The central portion 26 of the interlocking portion 24 is bonded to the second layer 14 such that the first bridging portion 18 is between the first end 28 of the interlocking portion 24 and the second layer 14 and the second bridging portion 20 is between the second end 30 of the interlocking portion 24 and the second layer 14. The interlocking portion 24 therefore provides an interlock between the second layer 14 and the bridging portions 18, 20 by virtue of the first and second ends 28, 30 of the interlocking portion 24 abutting the bridging portions 18, 20.

The first and second ends 28, 30 of the interlocking portion 24 are shaped so as to form lugs which protrude into the space between the first and second bridging portions 18, 20 and the first layer 12. Furthermore, the bridging portions 18, 20 fit loosely between the first and second ends 28, 30 of the interlocking portion 24 and the second layer 14 so that the first and second layers are able to move with respect to one another. This relative movement is possible because there is no direct join between the first and second layers, although the movement is limited by the bridging portions 18, 20 abutting either the lugs 28, 30 or the second layer 14.

There may be more than two bridging portions 18, 20 and more than one interlocking portion 24 between respective bridging portions, as shown for example in Figures 1 and 2.

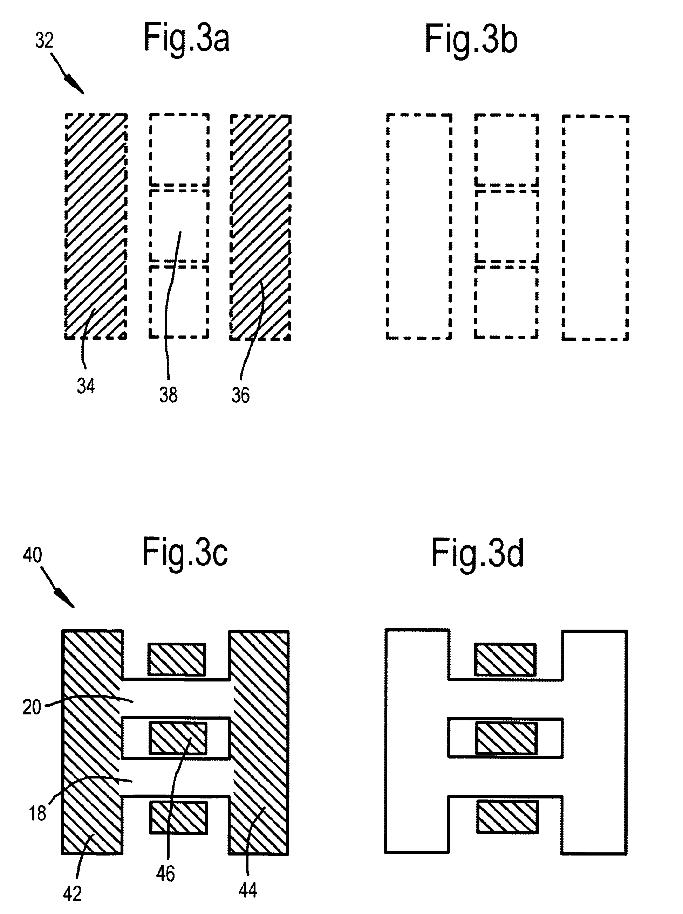

With reference to Figure 3, the method of manufacturing the above component 10 will now be described. The internal structure 16 comprises, and is formed from, a first membrane 32 and a second membrane 34. The first membrane is a layer bonded to the first layer across a first preselected area and the second membrane is a layer bonded to the second layer 14 across a second preselected area. The first and second membranes are also bonded to one another across a third preselected area, thereby forming a sandwich type structure with four layers.

Prior to bonding the first and second layers 12, 14 and the first and second membranes 32, 40 together a stop-off material is applied between the respective layers and membranes. Once the stop-off material has been applied, the layers are stacked together and heat and pressure are applied such that a diffusion bond is formed between the respective layers, except that a diffusion bond is not formed where the stop-off material has been applied. The component 10 is then located between appropriately shaped dies and is placed within an autoclave. The component 10 and dies are heated and pressurised fluid is supplied into the interior of the component to cause at least one of the layers to be superplastically formed to produce a component matching the shape of the dies. The component 10 may also be twisted into shape.

The first membrane 32 is made of separate elements as shown in figures 3(a) and 3(b) and the periphery of these elements are denoted by dashed lines. The first membrane comprises first and second support portions 34, 36, which are in the shape of strips, and a first intermediate portion 38 disposed between the first and second support portions 34, 36. The first and second support portions 34, 36 and first intermediate portion 38 are separate from one another, but together form the first membrane. The first intermediate portion 38 forms part of the interlocking portion 24 and as such there may be one or more first intermediate portions 38 (three are shown in Figures 3(a) and 3(b)).

The method comprises bonding the first and second support portions 34, 36 of the first membrane to the first layer 12. By contrast, the first intermediate portion 38 is not bonded to the first layer 12. The diagonal stripes in Figure 3(a) show where the first membrane 32 is joined to the first layer 12. This partial join is achieved by applying a stop-off material to the first intermediate portion 38 on the side facing the first layer 12 (or respective portion of the first layer which faces the first intermediate portion) so as to prevent a diffusion bond from forming between the first layer 12 and the first intermediate portion 38, but not the first and second support portions 34, 36.

The second membrane 40 is also made of separate elements as shown in figures 3(c) and 3(d) and the periphery of these elements are denoted by solid lines. The second membrane comprises third and fourth support portions 42, 44, which are substantially the same shape as the first and second support portions 34, 36 of the first membrane. The second membrane further comprises first and second bridging portions 18, 20 and a second intermediate portion 46. The second intermediate portion 46 is disposed between the third and fourth support portions 42, 44 and between the first and second bridging portions 18, 20. The first and second bridging portions 18, 20 connect the third and fourth support portions 42, 44 to one another with the gap 22 between the first and second bridging portions 18, 20. Accordingly, the third and fourth support portions 42, 44 and first and second bridging portions 18, 20 are a single element. By contrast, the second intermediate portion 46 is a separate element distinct from the first and second bridging portions 18, 20 and the third and fourth support portions 42, 44. The second intermediate portion 46 may be laser cut so as to be a separate element from the third and fourth support portions 42, 44 and first and second bridging portions 18, 20. The second intermediate portion 46 together with the first intermediate portion 38 forms the interlocking portion 24 and as such there may be one or more second intermediate portions 46 (three are shown in Figures 3(c) and 3(d)).

The method comprises bonding the third and fourth support portions 42, 44 of the second membrane to the first and second support portions 34, 36 of the first membrane so that the third and fourth support portions 42, 44 overlap the first and second support portions 34, 36. The method also comprises bonding the second intermediate portion 46 to the first intermediate portion 38. By contrast, the first and second bridging portions 18, 20 are not bonded to the first membrane 32 or first layer 12. The diagonal stripes in Figure 3(c) show where the second membrane 40 is joined to the first membrane 32. This partial join is achieved by applying the stop-off material to the first and second bridging portions 18, 20 on the side facing the first membrane 32 (or respective portion of the first layer and first membrane which faces the first and second bridging portions) so as to prevent a diffusion bond from forming between the first and second bridging portions 18, 20 and first layer 12 or first membrane 32.

In addition to the above, the method comprises bonding the second intermediate portion 46 of the second membrane 40 to the second layer 14. The bridging portions 18, 20 and third and fourth support portions 42, 44 are not however bonded to the second layer 14. The diagonal stripes in Figure 3(d) show where the second membrane 40 is joined to the second layer 14. This partial join is achieved by applying the stop-off material to the first and second bridging portions 18, 20 and third and fourth support portions 42, 44 on the side facing the second layer 14 (or respective portion of the second layer which faces the first and second bridging portions and third and fourth support portions 42, 44) so as to prevent a diffusion bond from forming between the first and second bridging portions 18, 20, third and fourth support portions 42, 44 and second layer 14.

Once the diffusion bonds have been formed between the respective layers, the component 10 is inflated. The bonding arrangement described above means that the second layer 14 is only attached to the internal structure 16, and hence first layer 12, at the second intermediate portion 46 of the interlocking portion 24. As the second layer 14 and second intermediate portion 46 are pulled away from the first layer 12 by the expansion process, the first and second ends 28, 30 of the interlocking portion 24 pull the first and second bridging portions 18, 20 away from the first layer 12. In doing so, the bridging portions 18, 20 are bent to form arches and the first and second ends 28, 30 of the interlocking portion 24 are bent to form tangs or lugs, which protrude into the space between the fist and second bridging portions 18, 20 and the first layer 12. Once the component 10 is inflated by a high pressure fluid (typically Argon), the component 10 is filled with a viscoelastic damping material. The lugs 28, 30 help to prevent movement of the viscoelastic damping material during use of the component.

The component 10 may be a blade for a turbomachine, for example a compressor fan blade. The first layer 12 and second layer 14 may form the suction and pressure surfaces of a blade respectively or vice-versa. The component 10 may be orientated so that the supporting strips 34, 36, 42, 44 are disposed in a radial direction of the turbomachine blade. Alternatively, the component 10 may be orientated so that the supporting strips 34, 36, 42, 44 are disposed in a circumferential direction. In either case, the assembly described above may be repeated in the chord-wise direction and/or span-wise direction. The lugs 28, 30 impede the flow of the viscoelastic damping material between the blade surfaces, which in the case of a rotor blade, would otherwise flow towards the blade tip due to the absence of a sufficient centripetal force.

Accordingly, the interlocking features of the present invention help to retain the viscoelastic damping material in place. At the same time damping is performed by the relative movement of the interlocking features and the interaction with the visco-fill damping material. Furthermore, the internal structure forms part of the structural strength and impact resistance of the assembly.

A key advantage to this arrangement is that the interlocking structures are formed as part of the hot forming process, whilst also allow the overall arrangement to be varied as required. The present invention also exhibits the following advantages:
- The lugs retain the viscoelastic material from centrifugal loadings.
- Geometric features can be aligned in any orientation within the flat pack, enabling features to be tailored to requirements.
- Interlocking features form a continuous uninterrupted web that can run from root to tip of the blade, enabling it to carry a proportion of the radial loads, whilst retaining the viscoelastic filler materials. It is desirable that the arches are aligned to extend between the root and tip.
- The interlocking structure ensures that the two panels are not rigidly bonded to each other because there is no continuous connection between the outer panels. This means that damping can continue to occur.
- The invention allows a complicated internal structure whilst maintaining forged material properties, which are required for highly stressed rotating structures.
- The interlocking features can be manufactured inside very small cavity geometries with minimal thickness. This makes the present invention desirable when constructing a thin aerofoil for example.
- It is possible to manufacture the interlocking geometry from a flat pack design.
- The interlocking structure will resist more impact energy than a truly hollow component.
- The interlocking structure prevents 'panting' and the effect of 'panting' straining the bond face of the viscoelastic damping media to the internal cavity wall.

A number of variations are possible. For example, the lengths of the lugs could be varied to ensure that they remain underneath the bridging portions, or shortening them so that they are drawn clear of the bridging portions. Furthermore, the lengths and spacing of the bridging portions can be varied to affect the steepness of each arch and their pitch. In a further alternative arrangement, lugs from adjacent interlocking portions could be connected together in order to ensure that the first and second layers remain linked together, yet are free to move relative to each other.

The above mentioned assembly and manufacturing method can be used in any component where the retention of a damping media or other material is required to be held in place. This could include rotating components or static ones. Similar structures can be layered using multiple sheets, forming even more complicated geometries. Examples of typical structures include: internal enclosed or vented cavities within hollow civil or military fan blades; internal enclosed or vented cavities within hollow civil or military blisks; and vibration damped static components. Such complex structures can be used where materials need to be restrained due to high gravitational or centripetal loadings occur or where high surface areas are required inside a component. The invention has been shown for use in an entire cavity, however it is conceivable that is could be used in a particular area of a large cavity, acting as a patch.

## Claims

1. A method of manufacturing a component comprising a first layer (12), a second layer (14) and an internal structure therebetween, wherein the method comprises:
providing the internal structure with a first bridging portion (18) and a second bridging portion (20) with a gap (22) therebetween;
bonding each bridging portion (18, 20) to the first layer (12) at first and second ends of each bridging portion (18, 20); **characterised by**
providing an interlocking portion (24) and disposing the interlocking portion (24) such that a central portion of the interlocking portion (24) is in the gap (22) between the first (18) and second (20) bridging portions; a first end of the interlocking portion (24) is between the first bridging portion (18) and the first layer (12); and a second end of the interlocking portion (24) is between the second bridging portion (20) and the first layer (12);
bonding the central portion of the interlocking portion (24) to the second layer (14);
expanding the component so that the first and second layers (12, 14) are forced apart and the first and second ends of the interlocking portion (24) are deformed by the first (18) and second (20) bridging portions respectively so as to form first (28) and second (30) lugs extending into a cavity defined between the first (12) and second (14) layers.

2. The method of manufacture according to claim 1, wherein the method further comprises superplastic forming and diffusion bonding any two of the first layer (12), second layer (14), first bridging portion (18), second bridging portion (20) and interlocking portion (24).

3. The method of manufacture according to claim 1 or 2, wherein the method further comprises providing a damping material between the first (12) and second (14) layers.

4. The method of manufacture according to any preceding claim, wherein the interlocking portion (24) is not directly bonded to the first (18) and second (20) bridging portions.

5. The method of manufacture according to any preceding claim, wherein the method further comprises providing a first membrane (32) and a second membrane (40), the first and second membranes (32, 40) being disposed between the first and second layers (12, 14) so as to form the internal structure with the first membrane (32) adjacent the first layer (12) and the second membrane (40) adjacent the second layer (14),
applying a stop-off material in a first predetermined pattern between the first layer and the first membrane (32) so as to prevent a diffusion bond from forming between the first layer (12) and the first membrane (32) across regions defined by said first predetermined pattern;
applying the stop-off material in a second predetermined pattern between the second layer (14) and the second membrane (40) so as to prevent a diffusion bond from forming between the second layer (14) and the second membrane (40) across regions defined by said second predetermined pattern; and
applying the stop-off material in a third predetermined pattern between the first and second membranes (32, 40) so as to prevent a diffusion bond from forming between the first and second membranes (32, 40) across regions defined by said third predetermined pattern.

6. The method of manufacture according to claim 5, wherein the first membrane (32) comprises first (34) and second support portions (36) and a separate first intermediate portion (38) disposed between the first (34) and second (36) support portions, the method further comprising:
bonding the first (34) and second (36) support portions of the first membrane (34) to the first layer (12).

7. The method of manufacture according to claim 6, wherein the second membrane (40) comprises third and fourth support portions (42, 44), first and second bridging portions (18, 20) and a separate second intermediate portion (46) disposed between the third and fourth support portions (42, 44) of the second membrane (40), the method further comprising:
bonding the third and fourth support portions (42, 44) of the second membrane (40) to the first and second support portions (34, 26) of the first membrane (31) respectively; and
bonding the second intermediate portion (46) of the second membrane (40) to the first intermediate portion (38) of the first membrane (32).

8. The method of manufacture according to claim 7, wherein the interlocking portion (24) comprises the first and second intermediate portions, the first and second ends of the interlocking portion (24) correspond to first and second ends of the first intermediate portion; and the central portion of the interlocking portion (24) corresponds to the second intermediate portion.

9. The method of manufacture according to claim 7 or 8, wherein the method further comprises laser cutting the second membrane (40) to separate the second intermediate portion from the first and second bridging portions (18, 20).

10. The method of manufacture according to any of claims 5 to 9, wherein the method further comprises heating and pressing the first (12) and second (14) layers and the first (32) and second (40) membranes to diffusion bond the first and second layers (12, 14) and the first and second membranes (32, 40) together to form an integral structure.

11. The method of manufacture according to any of claims 5 to 10, wherein the method further comprises placing the first and second layers (12, 14) and the first and second membranes (32, 40) between appropriately shaped dies; heating the first and second layers (12, 14), the first and second membranes (32, 40) and dies; and supplying a pressurised fluid between the first layer (12) and first membrane (32), first membrane (32) and second membrane (40), and second membrane (40) and second layer (14) to cause at least one of the first (12) and second layers (14) and first (32) and second (40) membranes to be superplastically formed.

12. The method of manufacture according to any preceding claim, wherein the component is an aerofoil structure for a turbomachine.

13. A component comprising a first layer (12), a second layer (14) and an internal structure therebetween, wherein the internal structure comprises:
a first bridging portion (18) and a second bridging portion (20) with a gap (22) therebetween, each bridging portion (18, 20) being bonded to the first layer (12) at first and second ends of each bridging portion (18, 20); **characterised in that** the component further comprises:
an interlocking portion (24) disposed such that a central portion of the interlocking portion (24) is in the gap (22) between the first (18) and second (20) bridging portions; a first end of the interlocking portion (24) is between the first bridging portion (18) and the first layer (12); and a second end of the interlocking portion (24) is between the second bridging portion (20) and the first layer (12);
wherein the central portion of the interlocking portion (24) is bonded to the second layer (14) and the first and second ends of the interlocking portion (24) are deformed so as to form first (28) and second (30) lugs extending into a cavity defined between the first (12) and second layers (14).

14. The component according to claim 13, wherein the component is an aerofoil structure for a turbomachine.

15. A turbomachine having a component manufactured according to claim 13 or 14.

## Patentansprüche

1. Verfahren zur Herstellung eines Bauteils mit einer ersten Schicht (12), einer zweiten Schicht (14) und einer zwischen diesen liegenden Innenstruktur, wobei das Verfahren Folgendes umfasst:
Bereitstellen einer Innenstruktur mit einem ersten Brückenteil (18) und einem zweiten Brückenteil (20) und mit einem zwischen diesen liegenden Spalt (22);
Verbinden jedes Brückenteils (18, 20) mit der ersten Schicht (12) an ersten und zweiten Enden jedes Brückenteils (18, 20);
**gekennzeichnet durch**:
Bereitstellen eines Verriegelungsteils (24) und Anordnen des Verriegelungsteils (24) derart, dass ein Mittelteil des Verriegelungsteils (24) in dem Spalt (22) zwischen den ersten (18) und zweiten (20) Brückenteilen liegt; wobei ein erstes Ende des Verriegelungsteils (24) zwischen dem ersten Brückenteil (18) und der ersten Schicht (16) liegt; und ein zweites Ende des Verriegelungsteils (24) zwischen dem zweiten Brückenteil (20) und der ersten Schicht (12) liegt;
Verbinden des Mittelteils des Verriegelungsteils (24) mit der zweiten Schicht (14);
Aufweiten des Bauteils derart, dass die ersten und zweiten Schichten (12, 14) auseinander gedrückt werden und die ersten und zweiten Enden des Verriegelungsteils (24) **durch** die ersten (18) bzw. die zweiten (20) Brückenteile verformt werden, so dass erste (28) und zweite (30) Laschen gebildet werden, die sich in einem Hohlraum erstrecken, der zwischen den ersten (12) und zweiten (14) Schichten gebildet ist.

2. Verfahren zur Herstellung nach Anspruch 1, bei dem das Verfahren weiterhin eine superplastische Formung und Diffusionsverbindung von irgendwelchen zwei der ersten Schicht (12), zweiten Schicht (14), des ersten Brückenteils (18), des zweiten Brückenteils (20) und des Verriegelungsteils (24) umfasst.

3. Verfahren zur Herstellung nach Anspruch 1 oder 2, bei dem das Verfahren weiterhin die Bereitstellung eines Dämpfungsmaterials zwischen den ersten (12) und zweiten (14) Schichten umfasst.

4. Verfahren zur Herstellung nach einem der vorhergehenden Ansprüche, bei dem der Verriegelungsteil (24) nicht direkt mit den ersten (18) und zweiten (20) Brückenteilen verbunden ist.

5. Verfahren zur Herstellung nach einem der vorhergehenden Ansprüche, bei dem das Verfahren weiterhin die Bereitstellung einer ersten Membran (32) und einer zweiten Membran (40) umfasst, wobei die ersten und zweiten Membranen (32, 40) zwischen den ersten und zweiten Schichten (12, 14) derart angeordnet sind, dass die Innenstruktur gebildet wird, wobei die erste Membran (32) benachbart zu der ersten Schicht (12) liegt und die zweite Membran (40) benachbart zu der zweiten Schicht (14) liegt;
Anbringen eines Abdeckmaterials in einem ersten vorgegebenen Muster zwischen der ersten Schicht (**12?**) und der ersten Membran (32), um die Bildung einer Diffusionsverbindung zwischen der ersten Schicht (12) und der ersten Membran (32) über Bereiche hinweg zu verhindern, die durch das erste vorgegebene Muster definiert sind;
Aufbringen des Abdeckmaterials in einem zweiten vorgegebenen Muster zwischen der zweiten Schicht (14) und der zweiten Membran (40) derart, dass die Bildung einer Diffusionsverbindung zwischen der zweiten Schicht (14) und der zweiten Membran (40) über Bereiche hinweg verhindert wird, die durch das zweite vorgegebene Muster definiert sind; und
Aufbringen des Abdeckmaterials in einem dritten vorgegebenen Muster zwischen den ersten und zweiten Membranen (36, 40), um auf diese Weise die Bildung einer Diffusionsverbindung zwischen den ersten und zweiten Membranen (32, 40) über Bereiche hinweg zu verhindern, die durch das dritte vorgegebene Muster definiert sind.

6. Verfahren zur Herstellung nach Anspruch 5, bei dem die erste Membran (32) erste (34) und zweite (36) Stützteile und einen getrennten ersten Zwischenteil (38) umfasst, der zwischen den ersten (34) und zweiten (36) Stützteilen angeordnet ist, wobei das Verfahren weiterhin das Verbinden der ersten (34) und zweiten (36) Stützteile der ersten Membran (32) mit der ersten Schicht (12) umfasst.

7. Verfahren zur Herstellung nach Anspruch 6, bei dem die zweite Membran (40) dritte und vierte Stützteile (42, 44), erste und zweite Brückenteile (18, 20) und einen getrennten zweiten Zwischenteil (40) umfasst, der zwischen den dritten und vierten Stützteilen (42, 44) der zweiten Membran (40) angeordnet ist, wobei das Verfahren weiterhin Folgendes umfasst:
Verbinden der dritten und vierten Stützteile (42, 44) der zweiten Membran (40) mit den ersten bzw. zweiten Stützteilen (34, 36) der ersten Membran (32); und
Verbinden des zweiten Zwischenteils (46) der zweiten Membran (40) mit dem ersten Zwischenteil (38) der ersten Membran (32).

8. Verfahren zur Herstellung nach Anspruch 7, bei dem der Verriegelungsteil (24) die ersten und zweiten Zwischenteile umfasst, wobei die ersten und zweiten Enden der Verriegelungsteile (24) ersten und zweiten Enden des ersten Zwischenteils entsprechen; und wobei der Mittelteil des Verriegelungsteils (24) dem zweiten Zwischenteil entspricht.

9. Verfahren zur Herstellung nach Anspruch 7 oder 8, bei dem das Verfahren weiterhin ein Laser-Schneiden der zweiten Membran (40) zur Trennung des zweiten Zwischenteils von den ersten und zweiten Brückenteilen (18, 20) umfasst.

10. Verfahren zur Herstellung nach einem der Ansprüche 5 bis 9, bei dem das Verfahren weiterhin das Erhitzen und Pressen der ersten (12) und zweiten (14) Schicht und der ersten (32) und zweiten (40) Membran für eine Diffusionsverbindung zwischen den ersten und zweiten Schichten (12, 14) und der ersten und zweiten Membranen (32, 40) miteinander zur Bildung einer einstückigen Struktur umfasst.

11. Verfahren zur Herstellung nach einem der Ansprüche 3 bis 9, bei dem das Verfahren weiterhin die Anordnung der ersten und zweiten Schichten (12, 14) und der ersten und zweiten Membran (32, 40) zwischen in geeigneter Weise geformten Gesenken; das Erhitzen der ersten und zweiten Schichten (12, 14), der ersten und zweiten Membran (32, 40) und der Gesenke; und das Zuführen eines unter Druck stehenden Strömungsmittels zwischen die erste Schicht (12) und die erste Membran (32), die erste Membran (32) und die zweite Membran (40) und die zweite Membran (40) und die zweite Schicht (14) umfasst, um zu bewirken, dass zumindest eine der ersten (12) und zweiten (14) und ersten (32) und zweiten (40) Membranen superplastisch verformt wird.

12. Verfahren zur Herstellung nach einem der vorhergehenden Ansprüche, bei der das Bauteil eine Flügelstruktur für eine Turbomaschine ist.

13. Ein Bauteil mit einer ersten Schicht (12), einer zweiten Schicht (14) und einer zwischen diesen liegenden Innenstruktur, wobei die Innenstruktur Folgendes umfasst:
einen ersten Brückenteil (18) und einen zweiten Brückenteil (20) mit einem Spalt (22) zwischen diesen, wobei jeder Brückenteil (18, 20) mit der ersten Schicht (12) an ersten und zweiten Enden jedes Brückenteils (18, 20) verbunden ist; **dadurch gekennzeichnet, dass** das Bauteil weiterhin Folgendes umfasst:
einen Verriegelungsteil (24), der derart angeordnet ist, dass ein Mittelteil des Verriegelungsteils (24) in dem Spalt (26) zwischen den ersten (18) und zweiten (20) Brückenteilen liegt; wobei ein erstes Ende des Verriegelungsteils (24) zwischen dem ersten Brückenteil (18) und der ersten Schicht (12) liegt und ein zweites Ende des Verriegelungsteils (24) zwischen dem zweiten Brückenteil (20) und der ersten Schicht (12) liegt;
wobei der Mittelteil des Verriegelungsteils (24) mit der zweiten Schicht (14) verbunden ist und die ersten und zweiten Enden des Verriegelungsteils (24) derart verformt werden, dass erste (28) und zweite (30) Laschen gebildet werden, die sich in einen Hohlraum erstrecken, der zwischen den ersten (12) und zweiten (14) Schichten gebildet ist.

14. Bauteil nach Anspruch 13, bei dem das Bauteil eine Flügelstruktur für eine Turbomaschine ist.

15. Turbomaschine mit einem Bauteil, das nach einem der Ansprüche 13 oder 14 hergestellt ist.

## Revendications

1. Procédé de fabrication d'un composant comprenant une première couche (12), une deuxième couche (14) et une structure interne entre elles, dans lequel le procédé comprend les étapes consistant à :
prévoir la structure interne avec une première partie formant pont (18) et une deuxième partie formant pont (20) avec un espace (22) entre elles ;
relier chaque partie formant pont (18, 20) à la première couche (12) aux première et deuxième extrémités de chaque partie formant pont (18, 20), **caractérisé par** les étapes consistant à :
prévoir une partie de verrouillage (24) et disposer la partie de verrouillage (24) de sorte qu'une partie centrale de la partie de verrouillage (24) est dans l'espace (22) entre les première (18) et deuxième (20) parties formant pont ; une première extrémité de la partie de verrouillage (24) est entre la première partie formant pont (18) et la première couche (12) ; et une deuxième extrémité de la partie de verrouillage (24) est entre la deuxième partie formant pont (20) et la première couche (11) ;
relier la partie centrale de la partie de verrouillage (24) à la deuxième couche (14) ;
expanser le composant de sorte que les première et deuxième couches (12, 14) sont écartées et les première et deuxième extrémités de la partie de verrouillage (24) sont déformées par les première (18) et deuxième (20) parties formant pont respectivement afin de former des première (28) et deuxième (30) pattes s'étendant dans une cavité définie entre les première (12) et deuxième (14) couches.

2. Procédé de fabrication selon la revendication 1, dans lequel le procédé comprend l'étape consistant à former de manière superplastique et relier par diffusion deux quelconques parmi la première couche (12), la deuxième couche (14), la première partie formant pont (18), la deuxième partie formant pont (20) et la partie de verrouillage (24).

3. Procédé de fabrication selon la revendication 1 ou 2, dans lequel le procédé comprend en outre l'étape consistant à prévoir un matériau d'amortissement entre les première (12) et deuxième (14) couches.

4. Procédé de fabrication selon l'une quelconque des revendications précédentes, dans lequel la partie de verrouillage (24) n'est pas directement reliée aux première (18) et deuxième (20) parties formant pont.

5. Procédé de fabrication selon l'une quelconque des revendications précédentes, dans lequel le procédé comprend en outre l'étape consistant à prévoir une première membrane (32) et une deuxième membrane (40), les première et deuxième membranes (32, 40) étant disposées entre les première et deuxième couches (12, 14) afin de former la structure interne avec la première membrane (32) adjacente à la première couche (12) et la deuxième membrane (40) adjacente à la deuxième couche (14),
appliquer un matériau d'arrêt selon un premier modèle prédéterminé entre la première couche et la première membrane (32) afin d'empêcher la formation d'une liaison par diffusion entre la première couche (12) et la première membrane (32) sur les régions définies par ledit premier modèle prédéterminé ;
appliquer le matériau d'arrêt selon un deuxième modèle prédéterminé entre la deuxième couche (14) et la deuxième membrane (40) afin d'empêcher la formation d'une liaison par diffusion entre la deuxième couche (14) et la deuxième membrane (40) sur les régions définies par ledit deuxième modèle prédéterminé ; et
appliquer le matériau d'arrêt selon un troisième modèle prédéterminé entre les première et deuxième membranes (32, 40) afin d'empêcher la formation d'une liaison par diffusion entre les première et deuxième membranes (32, 40) sur les régions définies par ledit troisième modèle prédéterminé.

6. Procédé de fabrication selon la revendication 5, dans lequel la première membrane (32) comprend des première (34) et deuxième parties de support (36) et une première partie intermédiaire (38) séparée disposée entre les première (34) et deuxième (36) parties de support, le procédé comprenant en outre l'étape consistant à :
relier les première (34) et deuxième (36) parties de support de la première membrane (32) à la première couche (12).

7. Procédé de fabrication selon la revendication 6, dans lequel la deuxième membrane (40) comprend des troisième et quatrième parties de support (42, 44), des première et deuxième parties formant pont (18, 20) et une deuxième partie intermédiaire séparée (46), disposée entre les troisième et quatrième parties de support (42, 44) de la deuxième membrane (40), le procédé comprenant en outre les étapes consistant à :
relier les troisième et quatrième parties de support (42, 44) de la deuxième membrane (40) aux première et deuxième parties de support (34, 36) de la première membrane (32) respectivement ; et
relier la deuxième partie intermédiaire (46) de la deuxième membrane (40) à la première partie intermédiaire (38) de la première membrane (32).

8. Procédé de fabrication selon la revendication 7, dans lequel la partie de verrouillage (24) comprend des première et deuxième parties intermédiaires, les première et deuxième extrémités de la partie de verrouillage (24) correspondent aux première et deuxième extrémités de la première partie intermédiaire ; et la partie centrale de la partie de verrouillage (24) correspond à la deuxième partie intermédiaire.

9. Procédé de fabrication selon la revendication 7 ou 8, dans lequel le procédé comprend en outre l'étape consistant à découper au laser la deuxième membrane (40) pour séparer la deuxième partie intermédiaire des première et deuxième parties formant pont (18, 20).

10. Procédé de fabrication selon l'une quelconque des revendications 5 à 9, dans lequel le procédé comprend en outre l'étape consistant à chauffer et comprimer les première (12) et deuxième (14) couches et les première (32) et deuxième (40) membranes pour relier par diffusion les première et deuxième couches (12, 14) et les première et deuxième membranes (32, 40) ensemble afin de former une structure solidaire.

11. Procédé de fabrication selon l'une quelconque des revendications 5 à 10, dans lequel le procédé comprend en outre l'étape consistant à placer les première et deuxième couches (12, 14) et les première et deuxième membranes (32, 40) entre des moules formés de manière appropriée ; chauffer les première et deuxième couches (12, 14), les première et deuxième membranes (32, 40) et les moules ; et
amener un fluide sous pression entre la première couche (12) et la première membrane (32), la première membrane (32) et la deuxième membrane (40), et la deuxième membrane (40) et la deuxième couche (14) afin d'amener au moins l'une parmi les première (12) et deuxième couches (14) et les première (32) et deuxième (40) membranes à être formées de manière superplastique.

12. Procédé de fabrication selon l'une quelconque des revendications précédentes, dans lequel le composant est une structure aérodynamique pour une turbomachine.

13. Composant comprenant une première couche (12), une deuxième couche (14) et une structure interne entre elles, dans lequel la structure interne comprend :
une première partie formant pont (18) et une deuxième partie formant pont (20) avec un espace (22) entre elles ; chaque partie formant pont (18, 20) étant reliée à la première couche (12) au niveau des première et deuxième extrémités de chaque partie formant pont (18, 20) ; **caractérisé en ce que** le composant comprend en outre :
une partie de verrouillage (24) disposée de sorte qu'une partie centrale de la partie de verrouillage (24) est dans l'espace (22) entre les première (18) et deuxième (20) parties formant pont ; une première extrémité de la partie de verrouillage (24) est entre la première partie formant pont (18) et la première couche (12) ; et une deuxième extrémité de la partie de verrouillage (24) est entre la deuxième partie formant pont (20) et la première couche (12) ;
dans laquelle la partie centrale de la partie de verrouillage (24) est reliée à la deuxième partie (14) et les première et deuxième extrémités de la partie de verrouillage (24) sont déformées afin de former des première (28) et deuxième (30) pattes s'étendant dans une cavité définie entre les première (12) et deuxième couches (14).

14. Composant selon la revendication 13, dans lequel le composant est une structure aérodynamique pour une turbomachine.

15. Turbomachine ayant un composant fabriqué selon les revendications 13 ou 14.
